# EUROPEAN PATENT APPLICATION

(11) **EP 4 756 622 A1**
(43) Date of publication of application: **10.06.2026**
(21) Application number: 25210686.9
(22) Date of filing: 23.10.2025
(51) Int. Cl.: G06F 11/10

(54) **METHOD FOR LOW LATENCY FAIL-OPERATIONAL TIME SENSITIVE NETWORKING**

(30) Priority: 03.12.2024 US 202418966942
(71) Applicant: Intel Corporation, Santa Clara, CA 95054 (US)
(72) Inventor: KASICHAINULA, Kishore, Johns Creek, GA 30022 (US); BEAUMONT, Thierry, 78100 Saint Germain-en-Laye (FR); PASUMARTHY, Dhanumjai, 500081 Hyderabad (IN); KAMMA, Sudhakar, El Dorado Hills, CA 95762 (US)
(74) Representative: Rummler, Felix

(57) **Abstract**

Methods and apparatus for low latency fail-operational Time Sensitive Networking. An apparatus includes an error detection and path switching (EDPS) circuit comprising circuitry to read data from volatile memory, detect whether read data is errant, the errant data including one or more uncorrectable errors, and send a message to access correct data corresponding to the errant data stored in a non-volatile memory device, the message identifying the correct data to be returned to the EDPS circuit. The apparatus receives the correct data and enables the correct data to be read by circuitry coupled to the EPDS circuit. The EDPS circuit includes Error Correction Code (ECC) logic to detect uncorrectable errors, detect the data has no ECC errors, and detect and correct single-bit errors to obtain corrected data. Data with no ECC errors and corrected data is immediately made available for reading by the circuitry coupled to the EPDS circuit.

## Description

### BACKGROUND INFORMATION

With the advent of Time Sensitive Networking (TSN) standards, today's automotive applications are increasingly integrating TSN capable Ethernet controllers. Time sensitive networking provides precise scheduling of data and scalability while reducing the wiring weight and cost. As automotive applications migrate from the traditional distributed field bus networks such as CAN (Controlled Area Network) to zonal Ethernet based TSN networks, the Ethernet TSN controllers must meet low latency not only from determinism and scheduling perspective but must also from safety perspective. For example, real-time data from a forward-facing radar or lidar sensor must arrive at the adaptive cruise control (ACC) electronic control unit (ECU) within a maximum latency window. Likewise, video streaming from a front-mounted camera for collision avoidance detection must arrive at the corresponding ECU within a known latency window.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 shows the progression of E/E architectures;
Figure 2 is a copy of Figure 5 of ISO 26262 that shows the fault detection time interval, fault reaction time interval, and fault tolerant time intervals for a system without a safety mechanism, a system implementing a safety mechanism, and a system with a safety mechanism with emergency operation;
Figure 3 is a schematic diagram illustrating an architecture including a NIC (Network Interface Controller) with direct connection to Static Random Access Memory (SRAM);
Figure 4 is a schematic diagram illustrating a NIC architecture supporting enhanced functionality and fail-safe operation provided by an "Error Detection & Path Switching (EDPS)" circuit that is added in between the NIC circuitry and the SRAMs, according to one embodiment;
Figure 5a is a flowchart depicting operations and logic implemented by the architecture of Figure 3, according to one embodiment;
Figure 5b is a flowchart depicting operations and logic implemented by the architecture of Figure 4, according to one embodiment; and
Figure 6 is a schematic diagram illustrating an architecture of a System on a Chip (SoC) including the NIC of Figure 4, according to one embodiment.

### DETAILED DESCRIPTION

Embodiments of methods and apparatus for low latency fail-operational Time Sensitive Networking are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

Vehicle electrical and/or electronic (E/E) architecture has been evolving recently to address new applications and features integrated into the vehicle, and the limitations of the traditional E/E architectures. The vehicle E/E architecture started with distributed/decentralized architectures, where a considerable number of ECUs are interconnected, and each of them has specific vehicular functionality. Then, it moves to domain-centralized, where centralized domain controllers are used, and centralized/zonal, where vehicle architecture makes use of zone controller architectures.

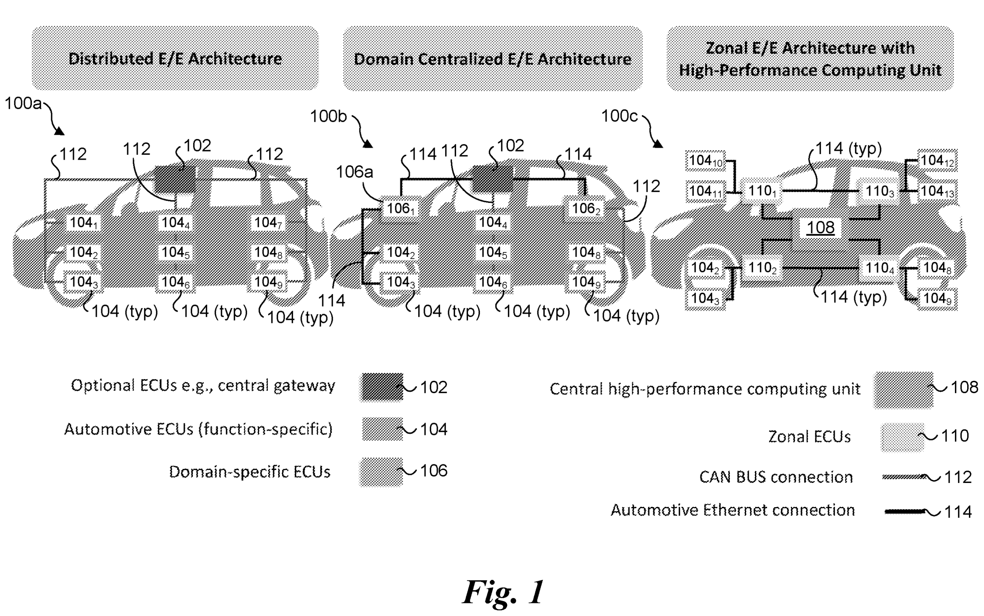

Figure 1 illustrates this progression of E/E architectures. The E/E architecture components shown in Figure 1 include a central gateway 102, automotive, function-specific ECUs 104, domain-specific ECUs 106, a central high-performance computing unit (HPCU) 108, zonal ECUs 110, controller area network (CAN) bus connections 112, and automotive Ethernet connections 114. The E/E architectures depicted in Figure 1 are simplified as actual implementations may employ dozens or more than 100 ECUs or the like.

Distributed E/E architecture 100a is representative of a first-generation architecture comprising function-specific ECUs 104₁ ... 104₉ that are connected to a central gateway 102 via wiring comprising a CAN bus 112. Utilizing central gateway 102 provides stronger collaboration among ECUs, the ability to handle more complex functions, e.g., adaptive cruise control, and the potential of cross-functional connection. The next evolution represents domain centralized E/E architectures 100b, which utilize domain-specific ECUs, such as ECUs 106₁ and 106₂ in combination with function-specific ECUs 104₁ ... 104₆, 104₈, and 104₉. The function-specific control units bind to the domain-specific ECUs using a CAN bus 112 and Ethernet connections 114. Moreover, a central gateway ECU 102 is used in this type of architecture. Architecture 100b is capable of handling more complex functions; furthermore, the architecture cost can be optimized using the consolidation of the functions. For instance, one domain-specific ECU (106₁) is assigned for the parking assistance system which includes two function-specific controllers 104₂ and 104₃ related to vision processing and actuator commands, e.g., for the brake and steering wheel.

Domain centralized E/E architectures, using domain controllers and central gateway, have grown over time and become extremely elaborate, including the car wiring harness. Additionally, the autonomous driving feature significantly increases the complexity of the architecture due to the increase in the number of sensors and actuators, growth of data processing capabilities and required bandwidth, and high demand for intelligent power distribution. To meet these requirements, Zonal E/E architectures with one or more high-performance computing units (HPCUs) have been introduced. The zonal architecture blends future vehicle functions and technologies with savings in weight and cost. As illustrated by zonal E/E architecture 100c, the zonal architecture comprises an HPCU 108, zonal ECUs 104₁, 104₂, 104₃, and 104₄, and function-specific ECUs 104₂, 104₃, 104₈, 104₉, and 104₁₀ ... 104₁₃. The central HPCU acts as the master to process all data coming from different vehicle zones and consequently operate the vehicle. In addition, the HPCU functions as a central gateway to pass the data from one zone to another. The ECUs and HPCU are interconnected via the Ethernet connection 114 for transmitting the data over the vehicle's network due to its speed and high bandwidth for data transmission. Additionally, the zonal architecture supports the virtual domain in such a way that the embedded functions can be transferred into the cloud as well as providing software download/update via update over the air (OTA) service for HPCU.

According to ISO 26262 Second Edition (2018), the Road Vehicle for Functional Safety defines the Fault Tolerance Time Intervale (FTTI) as: "Minimum time span from occurrence of a fault in an item to occurrence of a hazardous event could occur if a safety mechanism is not activated. "The typical FTTI of an item must be within 200ms and this time includes the fault reaction time, while the Fault Detection Time (FDI) allocated to the HPCU is often within 40-50ms. With a fault reaction being a reboot and the reboot taking 2 seconds at best, this is a clear violation of the FTTI specifications.

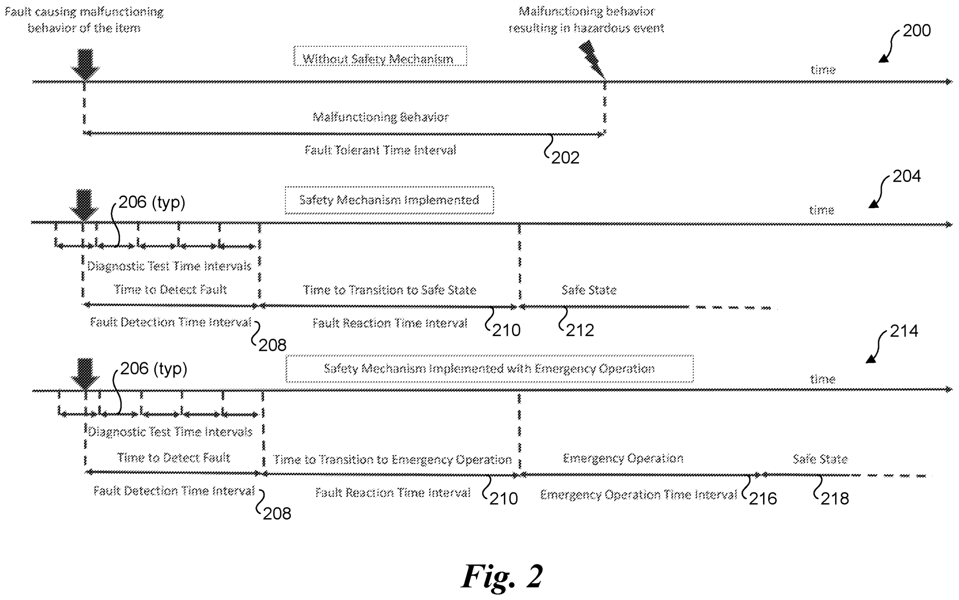

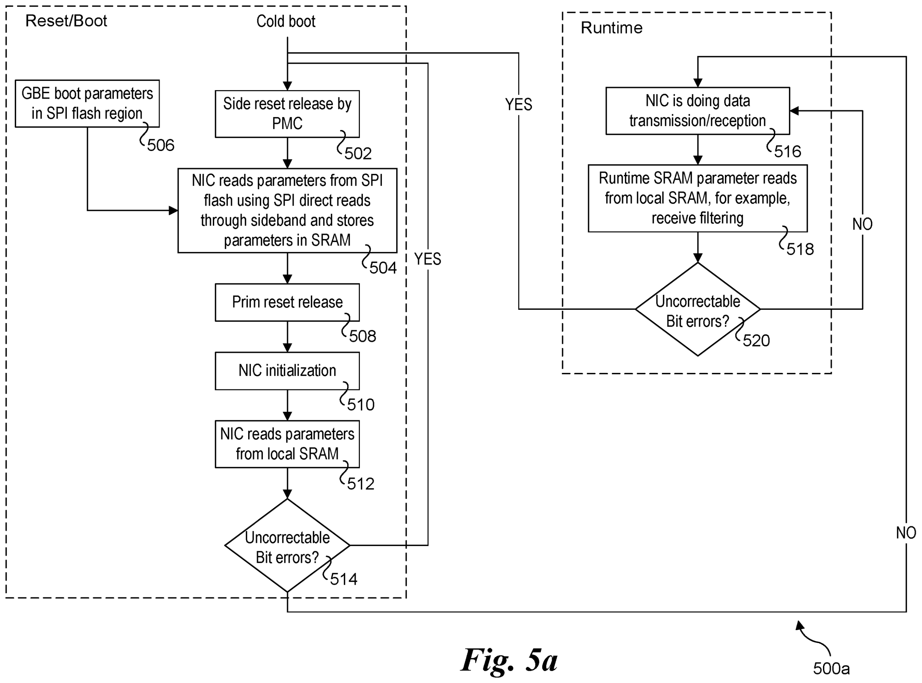

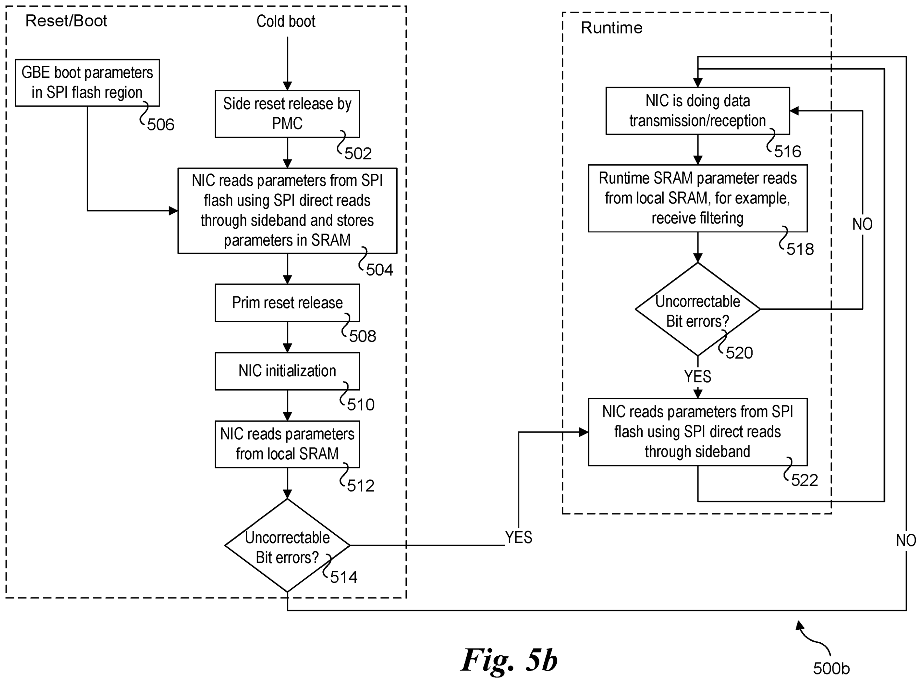

Figure 2, which is a copy of Figure 5 of ISO 26262, shows the fault detection time interval, fault reaction time interval, and fault tolerant time intervals. Timeline 200 shows a timing diagram for a system without a safety mechanism. The malfunctioning behavior following the FTTI 202 results in a hazardous event and therefore does not meet the requirements for ISO 26262.

Timeline 204 shows a timing diagram for a system implementing a safety mechanism. The system performs periodic diagnostic tests over diagnostic test intervals 206, with a fault detection time interval 208 spanning multiple diagnostic test intervals. Following fault detection time interval 208 is a fault reaction time interval 210 corresponding to a time to transition to a safe state 212.

Timeline 214 shows a timing diagram for a system implementing a safety mechanism with emergency operation. The first portion of timelines 204 and 214 are the same. The difference is an emergency operation time interval 216 follows fault reaction time interval 210 prior to transitioning to a safe state 218.

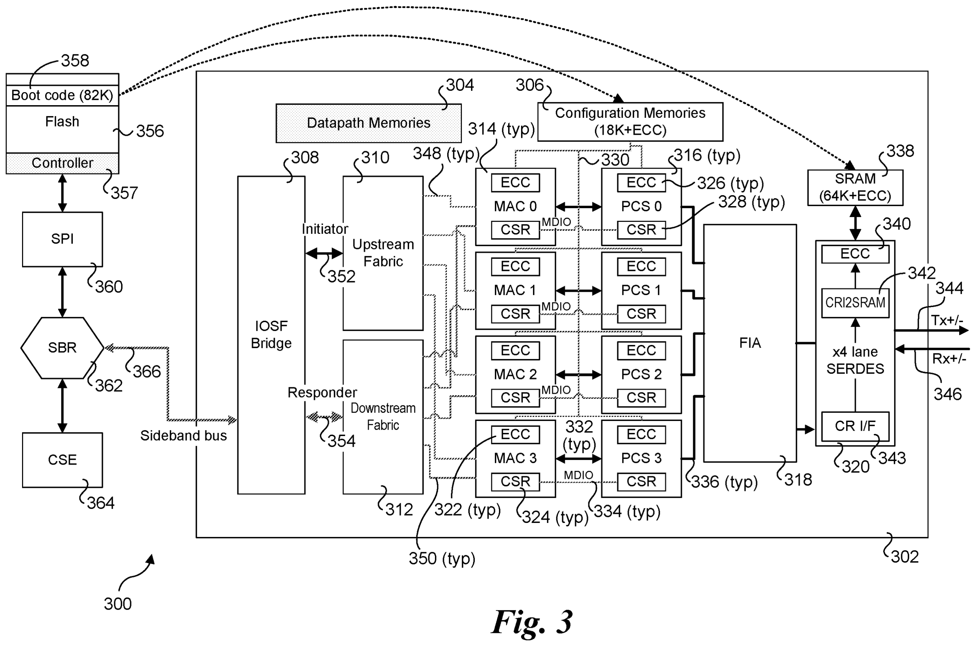

Figure 3 shows an architecture 300 including a NIC 302 with direct connection to SRAMs. NIC 302 includes datapath memories 304, configuration memories 306, an IOSF (Intel^{®} on Chip System Fabric) 308, an upstream fabric 310, a downstream fabric 312, multiple Media Access Channel (MAC) blocks 314 (labeled MAC 0, MAC 1, MAC 2, and MAC 3) coupled to respective Physical Coding Sublayer blocks 316 (labeled PCS 0, PCS 1, PCS 2, and PCS 3), a Flexible Interface Adapter (FIA) 318, and a Serialize Deserialize (SERDES) block 320.

Each MAC block 314 includes Error Correction Code (ECC) logic 322 and a Control and Status Register (CSR) 324. Each PCS block 316 includes ECC logic 326 and a CSR 328. Each MAC block 314 and PCS block 316 is connected to configuration memories 306 via an interconnect 330. There are respective interconnects 332 between pairs of MAC and PCS blocks 314 and 316 (e.g., MAC 0 to PCS 0), and the CSRs in respective pairs of AC and PCS blocks 314 and 316 are coupled via an MDIO (Management Data Input-Output) link 334. Each of PCS blocks 316 is connected to FIA 318 via a respective interconnect 336. FIA 318 is used to distribute signals between SERDES block 320 and PCS blocks 316. The combinations of PCS block and MAC blocks comprise respective Ethernet pipelines.

SERDES block 320 is configured to read boot code and ECC code from SRAM 338 and includes ECC logic 340, CRI2SRAM (CRI interface to SRAM) 342, and a CR (Configuration Register) interface (I/F) comprising a 4 lane (x4) SERDES block. I/O block 343 transmits a differential pair of transmit (Tx) signals 344 and receives a differential pair of receive (Rx) signals 346.

Each of MAC blocks 314 is connected to upstream fabric 310 via interconnects 348 and is connected to downstream fabric 312 via interconnects 350. Upstream fabric interfaces with IOSF bridge 308 via initiator signals 352, while downstream fabric 312 interfaces with IOSF bridge 308 via responder signals 354.

Architecture 300 employs several components that are external to NIC 302 including flash memory 356, which includes a controller 357 and has a secured, dedicated SPI flash region (GBE region) 358, an SPI (Serial Peripheral Interface) 360, a sideband router (SBR) 362, and a Converged Security Engine (CSE) 364. SBR 362 is connected to IOSF bridge 308 via a sideband bus 366. In one embodiment, flash memory 356 comprises NOR flash memory. More generally, flash memory 356 is a type of non-volatile memory.

In architecture 300, several NIC parameters pertaining to configuration, tuning and calibration are stored in SPI flash region 358 and the CSE firmware copies these parameters into the NIC's local SRAM 338 (a type of volatile memory) during cold boot to reduce access time. However, a downside of this is that SRAM is 2x to 5x more prone to bit errors than SPI NOR flash. In automotive applications, harsh operating conditions such as extreme heat, voltage fluctuations, cosmic and alpha irradiation can often manifest into bit errors during memory read/write operations. To improve functional safety (FuSa), currently the local SRAMs are ECC protected by a Single Error Correction and Double Error Detection (SECDED) algorithm that is implemented in the ECC logic shown in the Figures herein. The SECDED algorithm is able to detect single-bit and double-bit errors and correct the single-bit errors. However, when double-bit errors which are deemed as uncorrectable fatal errors occur, the NIC is rebooted or in some cases, even the entire SoC (System on a Chip) is rebooted, thus posing a question for adopting the technology in a safety critical environment. Consequently, if an action which is expected to be taken based on this data, it will lead to a deadline to be missed and result in a safety issue.

According to the description for Figure 5 of ISO 26262 Second Edition (2018), the Road Vehicle for Functional Safety defines the Fault Tolerance Time Intervale (FTTI) as: "Minimum time span from occurrence of a fault in an item to occurrence of a hazardous event could occur if a safety mechanism is not activated. "The typical FTTI of an item must be within 200ms and this time includes the fault reaction time, while the Fault Detection Time (FDI) allocated to the SoC is often within 40-50ms." With a fault reaction being a reboot and the reboot taking 2 seconds at best, this is a clear violation of the FTTI specifications.

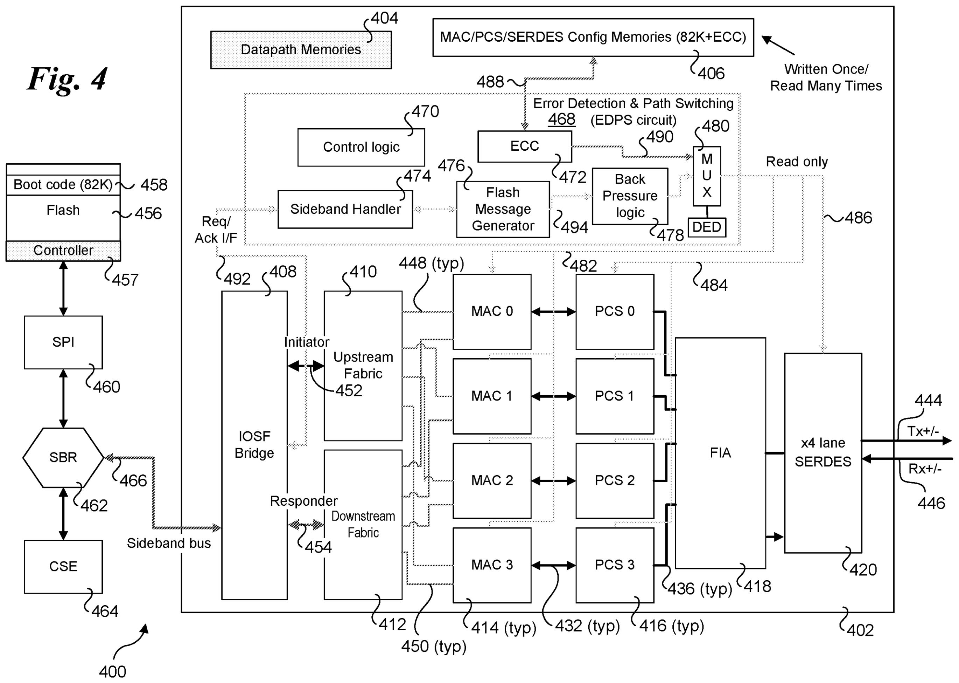

Figure 4 shows an architecture 400 supporting enhanced functionality and fail-safe operation. Architecture 400 includes a new circuit called "Error Detection & Path Switching (EDPS)" that is added in between the NIC circuitry and the SRAMs. Every SRAM memory transaction goes through the EDPS circuit, which first checks for ECC errors. If there are no ECC errors or correctable single bit errors, the EDPS circuit returns the correct value to the NIC. However, if there are uncorrectable errors, the EDPS circuit converts SRAM reads to SPI read messages and sends these messages over the IOSF sideband circuitry to the NOR flash and returns the original data instead of the corrupted data read from the local SRAM.

In addition to the new EDPS circuity, NIC 402 includes components that are similar to components with like reference numbers to NIC 302 where the '3' in Figure 3 is replaced with a '4' in Figure 2. These components include datapath memories 404, SRAM configuration memories 406, an IOSF bridge 408, upstream fabric 410, downstream fabric 412, MAC blocks 414, PCS blocks 416, FIA 418, and SERDES block 420.

The MAC blocks 414 and PCS block 416 are shown in simplified representation relative to that shown in Figure 3 and include similar functionality as MAC blocks 314 and 316, with the exception that ECC is not part of the EDPS block. As before, each MAC block and PCS block includes ECC logic and a CSR. There are respective interconnects 432 between pairs of MAC and PCS blocks 414 and 416 (e.g., MAC 0 to PCS 0), and the CSRs (not shown) in respective pairs of pairs of MAC and PCS blocks 414 and 416 are coupled via an MDIO links (not shown). Each of PCS blocks 416 is connected to FIA 418 via a respective interconnect 436. FIA 418 is connected to SERDES block 420, which transmits a differential pair of transmit (Tx) signals 444 and receives a differential pair of receive (Rx) signals 446.

Each of MAC blocks 414 is connected to upstream fabric 410 via interconnects 448 and is connected to downstream fabric 412 via interconnects 450. Upstream fabric interfaces with IOSF bridge 408 via initiator signals 452, while downstream fabric 412 interfaces with IOSF bridge 408 via responder signals 454.

As with architecture 300, architecture 400 employs components that are external to NIC 402 including flash memory 456 with controller 457 and having an SPI flash region 458, an SPI 460, an SBR 462, and a CSE 464. SBR 462 is connected to IOSF bridge 408 via a sideband bus 466.

Details of an EPDS circuit 468, according to one embodiment, are shown in the upper portion of Figure 4. EPDS circuit 468 includes control logic 470, ECC logic 472, a sideband handler 474, a flash message generator 476, back pressure logic 478, and a multiplexer (MUX) 480. The output of MUX 480 is connected to inputs of MAC block 414 via interconnect/bus 482, to the inputs of PCS blocks 416 via interconnect/bus 484, and to an input of SERDES block 420 via interconnect/bus 486. ECC logic 472 is connected to SRAM configuration memories 406 via an interconnect 488 and to MUX 480 via a signal path 490.

SERDES block 420 is configured to read boot code and ECC code from SRAM configuration memories 406 via EDPS circuit 468, reading from the output of MUX 480 via interconnect/bus 486. Similarly, each of MAC blocks 414 is configured to read boot code and ECC code from SRAM configuration memories 406 via EDPS circuit 468, reading from the output of MUX 480 via interconnect/bus 482 and each of PCS blocks 416 is configured to read boot code and ECC code from SRAM configuration memories 406 via EDPS circuit 468, reading from the output of MUX 480 via interconnect/bus 484.

Figure 5a shows a flowchart 500a illustrating operations and logic implemented by the circuitry in architecture 300 of Figure 3, according to one embodiment. The process begins with a cold boot and proceeds to a block 502 in which the side reset is released by the PMC (Power Management Controller). Every block in the SOC is in reset at the beginning of cold boot. During the cold boot, the PMC will bring each block (or group of blocks) in stages. In a block 504 the NIC reads parameters from the SPI flash using SPI direct reads through the sideband signaling and stores these parameters in the local SRAM. As shown in a data block 506, block 504 reads GBE boot parameters in the SPI region 358 of NOR flash 356.

Next, a Prim (primary) reset release occurs in a block 508, followed by NIC initialization in a block 510. The Prim reset is used to reset all the data transaction circuits. In a block 512, the NIC reads parameters from local SRAM (338).

In a decision block 514, a determination is made to whether there are uncorrectable bit errors. As discussed above, the SRAMs are ECC protected using a SECDED algorithm. When there are no bit errors or correctable bit errors that are handled by the SECDED algorithm, the answer to decision block 514 is NO, and the logic proceeds to a block 516 to begin runtime operations. Conversely, when there are uncorrectable bit errors, the answer to decision block 514 is YES, and the logic loops back to block 502 to restart/reboot the NIC.

Continuing at block 516, in this block the NIC is doing data transmission and/or reception during ongoing runtime operations following the boot operations through decision block 514. In a block 518 runtime SRAM parameter(s) are read from local SRAM. For example, this might include parameters relating to receive filtering.

As the parameters are read, errors in the data bits are detected using the SECDED algorithm, with correctable bit errors being corrected by the algorithm, as before. In a decision block 520, a determination is made to whether the parameter data have any uncorrectable errors. If there are no bit errors detected or any detected bit errors have been corrected, the answer to decision block 520 is NO and the logic loops back to block 516 to continue the runtime processing loop. If there are any uncorrectable errors that are detected, the answer to decision block 520 is YES and the logic returns to block 502 to reset/reboot the NIC.

Figure 5b shows a flowchart 500b illustrating operations and logic implemented by the circuitry in architecture 400 of Figure 4, according to one embodiment. The operations in blocks 502, 504, 506, 508, 510, and 512 are the same as described above for flowchart 500a, noting that these reset/reboot operations are only performed once. In decision block 514 if there are uncorrectable bit errors that are detected, the logic proceeds to a block 522 in which the NIC reads the parameters from the SPI flash using SPI direct reads through the sideband signal path. Having directly read any applicable parameters, the logic proceeds to block 516 to begin the runtime NIC operations. Similarly, if there are any uncorrectable bit errors detected in decision block 520 during runtime, the logic proceeds to block 522 to read any errant parameters from the SPI flash using SPI direct reads through the sideband signal path.

With reference to Figure 4, an SPI direct read of the SPI flash (e.g., SPI flash region 458 in flash memory 456) proceeds as follows. Control logic 470 will detect that ECC logic 472 has detected an uncorrectable error for a parameter read from configuration memories 406. Under one embodiment, each parameter has a known memory address in SPI flash region 458. Under an alternative embodiment, parameters are identified as objects and there is logic implemented by controller 457 to identify the location of each object in SPI flash region 458.

Next, control logic 470 instructs flash message generator 476 to generate an SPI read request message including the address or an object identifier for the errant parameters (generally, the errant data). Optionally, ECC logic can be configured to instruct flash message generator 476 to generate the SPI read request message. The SPI read request message is sent via sideband handler 474 to IOSF bridge 408 via a sideband request/acknowledgement interface 492. IOSF bridge reads the SPI read request message, recognizing it is a sideband message and forwards the message to SBR 462 via sideband bus 466. SBR 462 routes the message to SPI 460, which forwards the SPI read request message to controller 457 (or otherwise places the SPI message in an interface buffer that is read by controller 457).

Controller 457, using the parameter address or object identifier extracted from the SPI read request message, reads the correct copy of the parameter from SPI flash region 458. Controller 457 then generates an SPI read response message with acknowledgment including the correct copy of the parameter with a destination address of sideband handler 474. The SPI read response message is routed via SBR 462 via sideband bus 466 to IOSF bridge 408, which inspects the message and forwards the message to sideband handler 474 via sideband request/acknowledgement interface 492.

Upon receipt of the SPI read response message, sideband handler 474 forward the message to flash message generator 476, which extracts the correct copy of the parameter from the SPI read response message and forward the correct copy of the parameter to MUX 480 via a signal path 494. Back pressure logic 478 may be used to coordinate the timing of when the correct copy of the parameter is forwarded to MUX 480. Control logic 470 (or ECC logic) uses a DED (double error detected) control input to MUX 480 to control what input path (490 or 494) the MUX should connect to. MUX 480 enables the correct parameter to be read by MAC blocks 414 via interconnect/bus 482, PCS blocks 416 via interconnect/bus 484, or SERDES block 420 via interconnect/bus 486.

For parameters read from configuration memories 406 with single-bit errors (as detected by ECC logic 472), the ECC logic corrects the single-bit errors and forwards the corrected parameter to MUX 480 via signal path 490 without activating the DED control input. For parameters read from configuration memories 406 without errors, ECC logic forwards the parameters to MUX 480 via signal path 490 without activating the DED control input.

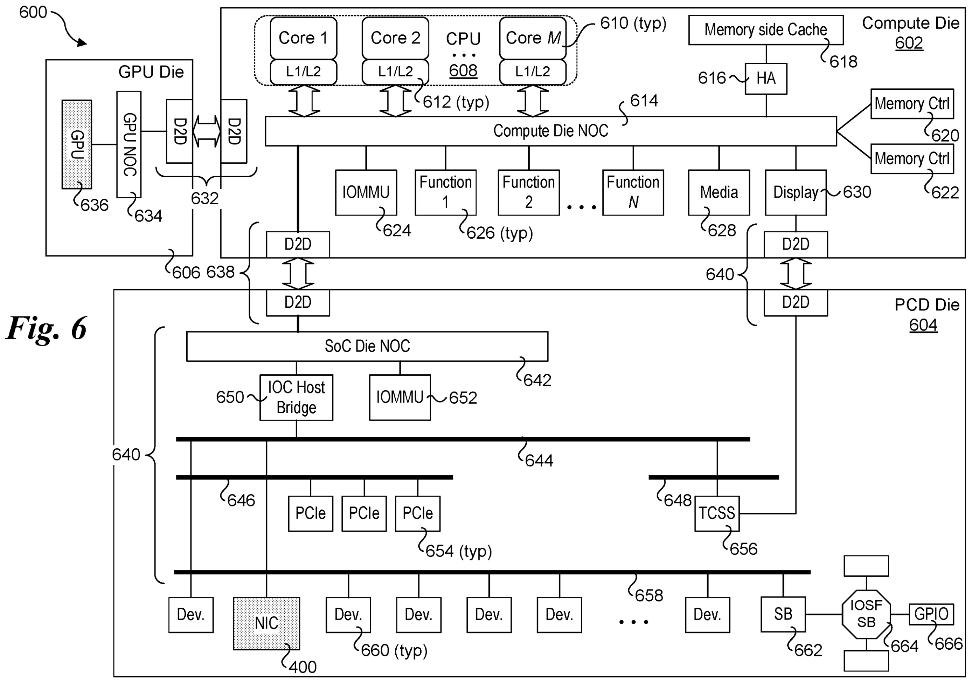

Figure 6 shows an example of an SoC 600 including NIC 400, according to one embodiment. SoC 600 includes a compute die 602, a PCD (Platform Control) die 604, and a GPU (Graphics Processing Unit) die 606. Compute die 602 includes a Central Processing Unit (CPU) 608 comprises a plurality of cores 610, each having a respective Level 1 and Level 2 (L1/L2) cache 612. Each of L1/L2 caches 612 is connected to a compute die Network ON Chip (NOC) 614, which comprises an interconnect structure and/or fabric to facilitate communication between components connected to the NOC. For simplicity, the NOCs illustrated in Figure 6, including compute die NOC 614, are depicted as a rectangular block.

Other components connected to compute die NOC 614 include an HA (Home Agent) 616 coupled to a memory side cache 618, memory controllers 620 and 622, an input-output memory management unit (IOMMU) 624, one or more function block 626, a media block 628, and a display 630. Function blocks 626 are illustrative of various types of Intellectual Property (IP) comprising embedded logic and/or circuitry on compute die 602 that is configured to perform one or more functions.

GPU die 606 is connected to compute die 602 via a die-to-die (D2D) interconnect 632 and includes a GPU NOC 634 and a GPU 636. Generally, GPU die 606 may include components and circuitry found in GPUs of various architecture, including either on-die memory or one or more memory controllers configured to be connected to external (from the SoC) memory.

PCD die 604 is coupled to compute die 602 via a pair of D2D interconnects 638 and 640. D2D interconnect is coupled to an SoC die NOC 642 to which an IOC host bridge 650 and an IOMMU 652 are coupled. IOC host bridge 650 sits between SoC die NOC 642 and an IO fabric/interconnect hierarchy 640, comprising a plurality of fabric segments 644, 646, 648, and 658. Generally, a given fabric segment may employ an associated protocol while there may be bridges or the like (not shown) between different fabric segments in the hierarchy. Multiple PCIe interfaces 654 are coupled to fabric segment 646, while a TCSS 656 (Type-C Subsystem) is coupled to fabric segment 648. TCSS 656 is also connected to D2D interconnect 640.

Various devices, components and/or IP blocks are connected to fabric segment 658 including a plurality of devices 660, NIC 400, and a sideband block 662. For convenience and simplicity, device blocks 660 are illustrative of a device, component, or IP blocks. An IOSF sideband router 664 is connected to SB block 662. IOSF sideband router 664 is used to route data to IO components connected to it, as illustrated by a General Purpose IO (GPIO) block 666.

In addition to the illustrated components, PCD die 604 may include additional fabric segments and devices/components/IP blocks, such as WiFi and Bluetooth blocks, manageability components, accelerators, etc. PCD die 604 may further include various PHY circuitry, such as but not limited to PCIe PHYs, USB (Universal Serial Bus) PHYs, GPIO PHYs, and/or others.

In one non-limiting targeted application, SoC 600 comprises a HPCU designed to be implemented in a zonal E/E architecture in a vehicle. The low latency fail-operational TSN architecture implemented by NIC 400 is well-suited for electrically noisy and temperature-variant environments, such as found modern cars, trucks, and other types of vehicles.

While various embodiments described herein use the term System-on-a-Chip or System-on-Chip ("SoC") to describe a device or system having a processor and associated circuitry *(e.g.,* Input/Output ("I/O") circuitry, power delivery circuitry, memory circuitry, *etc.)* integrated monolithically into a single Integrated Circuit ("IC") die, or chip, the present disclosure is not limited in that respect. For example, in various embodiments of the present disclosure, a device or system can have one or more processors (e.g., one or more processor cores) and associated circuitry (e.g., Input/Output ("I/O") circuitry, power delivery circuitry, *etc.)* arranged in a disaggregated collection of discrete dies, tiles and/or chiplets *(e.g.,* one or more discrete processor core die arranged adjacent to one or more other die such as memory die, I/O die, *etc.).* In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP").

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other. Additionally, "communicatively coupled" means that two or more elements that may or may not be in direct contact with each other, are enabled to communicate with each other. For example, if component A is connected to component B, which in turn is connected to component C, component A may be communicatively coupled to component C using component B as an intermediary component.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

The operations and functions performed by various components described herein may be implemented by software/firmware running on a processing element, via embedded hardware or the like (pre-programmed circuitry or programmable circuitry such a Field Programmable Gate Arrays (FPGA), or any combination of hardware and software/firmware. Such components may be implemented as software/firmware modules, hardware modules, special-purpose hardware *(e.g.,* application specific hardware, ASICs, DSPs, *etc.),* embedded controllers, hardwired circuitry, hardware logic, *etc.* Software/firmware content *(e.g.,* data, instructions, configuration information, *etc.)* may be provided via an article of manufacture including non-transitory computer-readable or machine-readable storage medium, which provides content that represents instructions that can be executed. The content may result in a computer performing various functions/operations described herein.

As used herein, a list of items joined by the term "at least one of" can mean any combination of the listed terms. For example, the phrase "at least one of A, B or C" can mean A; B; C; A and B; A and C; B and C; or A, B and C.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. An apparatus comprising an error detection and path switching (EDPS) circuit comprising circuitry to:
read data from volatile memory,
detect whether read data is errant, the errant data including one or more uncorrectable errors;
when errant data is detected,
send a message to access correct data corresponding to the errant data stored in a non-volatile memory device, the message identifying the correct data to be returned to the EDPS circuit;
receive the correct data; and
enable the correct data to be read by circuitry coupled to the EDPS circuit.

2. The apparatus of claim 1, wherein the EDPS circuit includes error correction code (ECC) circuitry to detect bit errors in the read data, and the EDPS circuit is further configured to:
employ the ECC circuitry to detect bit errors in the read data; and
correct bit errors that are correctable to obtain correct data; and
enable the correct data to be read by circuitry coupled to the EDPS circuit.

3. The apparatus of claim 2, wherein the ECC circuitry is configured to detect uncorrectable bit errors.

4. The apparatus of any of the preceding claims, wherein the non-volatile memory device comprises a flash memory device, and the EDPS circuit includes a flash message generator to generate a message that is to be received by the flash memory device data.

5. The apparatus of any of the preceding claims, wherein the non-volatile memory device is accessed using a sideband interconnect or sideband bus over which messages are transmitted and received, wherein the EDPS circuit further comprises a sideband handler to send messages to and receive messages from the non-volatile memory device via the sideband interconnect or sideband bus.

6. An apparatus, comprising:
a network interface controller (NIC), including:
circuitry to implement an Ethernet transmit and receive pipeline, including a Serializer/Deserializer (SERDES) block, a plurality of Media Access Channel (MAC) blocks coupled to respective Physical Coding Sublayer (PCS) blocks;
Static Random Access Memory (SRAM);
an input/output (I/O) interface; and
an error detection and path switching (EDPS) circuit having an output coupled to the SERDES block and each of the plurality of MAC blocks and each of the respective PCS blocks, the EDPS circuit configured to:
read data from SRAM,
detect whether read data is errant, the errant data including one or more uncorrectable errors;
when errant data is detected,
read or receive correct data comprising a correct copy of the errant data via the I/O interface; and
enable the correct data to be read by one or more of the SERDES block, the plurality of MAC blocks and the respective PCS blocks.

7. The apparatus of claim 6, wherein the EDPS circuit is configured to:
send a first message to access a non-volatile memory device in which the correct data are stored, the first message identifying the correct data to be returned to the EDPS circuit; and
receive a second message containing the correct data.

8. The apparatus of claim 6 or 7, wherein the non-volatile memory device comprises flash memory device, and the EDPS circuit includes a flash message generator to generate a message that is configured to access data stored on the flash memory device.

9. The apparatus of any of claims 6-8, wherein the non-volatile memory device is accessed using a sideband interconnect or sideband bus associated with the I/O interface over which messages are transmitted and received, wherein the EDPS circuit further comprises a sideband handler to send messages to and receive messages from the non-volatile memory device via the sideband interconnect or sideband bus.

10. The apparatus of any of claims 6-9, wherein the apparatus comprises a System on a Chip (SoC) or System on Package (SoP), further comprising:
a plurality of processor cores;
an interconnect structure comprises a hierarchy of interconnect segments, including a first interconnect segment to which the plurality of cores are coupled and a second interconnect structure to which the NIC is coupled.

11. A method implemented by a Network Interface Controller (NIC), comprising:
writing data including boot code stored in a non-volatile memory device into volatile memory on the NIC,
in response a read request from a read requestor to read data from the volatile memory,
performing an error correction code (ECC) check to determine whether the read data,
has no ECC errors;
has one or more correctable single-bit errors; or
comprises errant uncorrectable data including one or more uncorrectable errors;
comprises errant data including one or more uncorrectable errors,
has one of no ECC errors, one or more correctable single bit errors, or one or more uncorrectable errors;
when it is determined the read data comprises errant uncorrectable data,
access correct data comprising a correct copy of the errant uncorrectable data from the non-volatile memory device; and
provide the correct data to the read requestor.

12. The method of claim 11, further comprising:
when it is determined the read data has one or more correctable errors,
using an ECC algorithm to correct the correctable errors to obtain corrected read data; and
providing the corrected read data to the read requestor.

13. The method of claim 11 or 12, wherein accessing the correct data from the non-volatile memory device comprises:
generating and sending a first message from the NIC to the non-volatile memory device, the first message identifying one of the correct data or a location of the correct data in the non-volatile memory device;
reading the correct data from the non-volatile memory device; and
returning a second message from the non-volatile memory device to the NIC.

14. The method of any of claims 11-13, wherein the non-volatile memory comprises flash memory and wherein the NIC includes an error detection and path switching (EDPS) circuit that includes a flash message generator that generates the first message and extracts the correct data from the second message.

15. The method of any of claims 11-14, wherein the non-volatile memory device is accessed using a sideband interconnect or sideband bus over which messages are transmitted from and received by a sideband interface on the NIC, further comprising using a sideband handler to send the first message and handle the second message following receipt of the second message at the sideband interface.
